# EUROPÄISCHE PATENTANMELDUNG

(11) **EP 2 583 844 A1**
(43) Veröffentlichungstag der Anmeldung: **24.04.2013**
(21) Anmeldenummer: 12187347.5
(22) Anmeldetag: 05.10.2012
(51) Int. Cl.: B60D 1/64, B60R 9/10, B60L 11/18, B60L 1/00, H01M 10/46

(54) **Vorrichtung zum Aufladen von Akkumulatoren von Elektrofahrrädern auf einem an ein Kraftfahrzeug angebauten Fahrradträger**

(30) Priorität: 20.10.2011 DE 202011051695 U
(71) Anmelder: Rüttgerodt, Werner, 34355 Staufenberg (DE)
(72) Erfinder: Rüttgerodt, Werner, 34355 Staufenberg (DE)
(74) Vertreter: Rehberg Hüppe + Partner

(57) **Zusammenfassung**

Bei einer Vorrichtung (1) zum Aufladen von Akkumulatoren von Elektrofahrrädern auf einem an ein Kraftfahrzeug angebauten Fahrradträger, die einen Stecker (2) zum Einstecken in eine Anhängersteckdose des Kraftfahrzeugs und einen am Ende eines Anschlusskabels (9) angeordneten Anschlussstecker (10) zum elektrischen Anschluss an ein Akkumulator aufweist, ist der Stecker (2) an einem Ende eines Gehäuses (4) vorgesehen, an dessen anderen Ende eine Anhängersteckdose (3) der Vorrichtung (1) ausgebildet ist, und das Anschlusskabel (9) mit dem Anschlussstecker (10) tritt seitlich aus dem Gehäuse (4) heraus.

## Beschreibung

Die Erfindung bezieht sich auf eine Vorrichtung zum Aufladen von Akkumulatoren von Elektrofahrrädern auf einem an ein Kraftfahrzeug angebauten Fahrradträger.

Fahrradträger zum Anbau an ein Kraftfahrzeug können sich an Dachrelings oder den Rändern einer Heckklappe des jeweiligen Kraftfahrzeugs abstützen. Eine bequemere Montage ist möglich, wenn das Kraftfahrzeug über eine Anhängerkupplung verfügt. In diesem Fall ist in der Regel auch eine Anhängersteckdose an dem Kraftfahrzeug vorhanden, über die eine eigene Beleuchtungseinrichtung des Fahrradträgers einschließlich von Ringleuchten von der Elektrik des Kraftfahrzeugs angesteuert und versorgt werden kann.

Die vorliegende Erfindung befasst sich jedoch nicht mit der näheren Ausgestaltung eines Fahrradträgers, sondern mit einer Vorrichtung, mit der Elektrofahrräder, die auf einem Fahrradträger transportiert werden, während dieses Transports aufgeladen werden können.

Elektrofahrräder unterstützen ihre Benutzer mit Antriebskraft und ermöglichen damit auch untrainierten Personen längere Fahrradtouren mit größeren Höhenunterschieden. Wenn jedoch das Gewicht eines Elektrofahrrads durch die benötigten Akkumulatoren nicht allzu sehr ansteigen soll, ist die Reichweite dieser Akkumulatoren auch bezogen auf typische Längen von Fahrradtouren begrenzt. Sie müssen daher regelmäßig wieder aufgeladen werden. Dies ist unterwegs, beispielsweise im Urlaub mit Fahrrad und Auto nicht immer problemlos möglich.

### STAND DER TECHNIK

Eine Vorrichtung zum Aufladen von Akkumulatoren von Elektrofahrrädern auf einem an ein Kraftfahrzeug angebauten Fahrradträger ist aus der DE 20 2011 003 991 U1 bekannt. Es handelt sich um eine in den Fahrradträger integrierte Ladestation, die über Anschlusskabel nicht nur an die in den Fahrrädern belassenen Akkumulatoren anschließbar ist, sondern auch Fächer zur Aufnahme zusätzlicher Akkumulatoren aufweist. Die Ladeleistung der Ladestation soll zwar an die elektrischen Kenngrößen des jeweiligen Akkumulators anpassbar sein. Die Verwendung der Ladestation verlangt jedoch in jedem Fall die Anschaffung des sie umfassenden Fahrradträgers; und trotzt ihrer Anpassbarkeit ist keinesfalls sichergestellt, dass sie für die nächste Generation von Elektrofahrrädern weiterhin geeignet ist. Versorgt wird die bekannte Ladestation über eine Versorgungsleitung, die aus einem Stecker des Fahrradträgers herausgeführt ist, der ansonsten die Beleuchtungseinrichtung des Heckträgers mit der Elektrik des Kraftfahrzeugs über dessen Anhängersteckdose verbindet.

Aus der EP 1 174 976 A1 ist eine Vorrichtung zum Aufladen von Akkumulatoren von Elektrofahrrädern auf einem an ein Kraftfahrzeug angebauten Fahrradträger bekannt, die einen Stecker zum Einstecken in eine Steckdose bzw. einen Zigarettenanzünder in dem Kraftfahrzeug und einen weiteren Stecker zum elektrischen Anschluss an den jeweiligen Akkumulator aufweist. Dabei ist dieser zweite Stecker an einem so langen Kabel vorgesehen, dass es aus dem Kofferraum des jeweiligen Kraftfahrzeugs bis zu dem Fahrrad auf dem Fahrradträger hinausgeführt werden kann. Alternativ kann der Akkumulator mit der bekannten Vorrichtung im Kofferraum des Kraftfahrzeugs aufgeladen werden.

### AUFGABE DER ERFINDUNG

Der Erfindung liegt die Aufgabe zugrunde, eine Vorrichtung zum Aufladen von Akkumulatoren von Elektrofahrrädern auf einem an ein Kraftfahrzeug angebauten Fahrradträger mit den Merkmalen des Oberbegriffs des unabhängigen Patentanspruchs 1 aufzuzeigen, die kostengünstig und einfach zu handhaben ist und mit der Technologieänderungen bei Elektrofahrrädern leicht nachvollzogen werden können.

### LÖSUNG

Die Aufgabe der Erfindung wird durch eine Vorrichtung zum Aufladen von Akkumulatoren von Elektrofahrrädern auf einem an ein Kraftfahrzeug angebauten Fahrradträger gelöst, die die Merkmale des unabhängigen Patentanspruchs 1 aufweist. Bevorzugte Ausführungsformen der erfindungsgemäßen Vorrichtung sind in den abhängigen Patentansprüchen definiert.

### BESCHREIBUNG DER ERFINDUNG

Die neue Vorrichtung weist ihren Stecker zum Einstecken in eine Anhängersteckdose des Kraftfahrzeugs an einem Ende eines Gehäuses auf, an dessen anderen Ende eine weitere Anhängersteckdose ausgebildet ist. Dabei tritt ihr Anschlusskabel mit dem Anschlussstecker zum elektrischen Anschluss an den Akkumulator des jeweiligen Elektrofahrrads seitlich aus diesem Gehäuse heraus.

Die erfindungsgemäße Vorrichtung ist damit kein Teil des jeweiligen Fahrradträgers. Vielmehr kann sie in Verbindung mit einem beliebigen Fahrradträger verwendet werden. Dabei ist es ohne Bedeutung, ob der Fahrradträger an Dachrelings, einer Heckklappe oder einer Anhängerkupplung des jeweiligen Kraftfahrzeugs montiert wird, solange das Kraftfahrzeug eine Anhängersteckdose aufweist. In diese wird die erfindungsgemäße Vorrichtung mit ihrem Stecker eingesteckt; und ihr Anschlussstecker wird elektrisch and den aufzuladenden Akkumulator des jeweiligen Elektrofahrzeugs angeschlossen. Eine etwaige Beleuchtungseinrichtung des jeweiligen Fahrradträgers kann über die Anhängersteckdose der erfindungsgemäßen Vorrichtung an die Elektrik des jeweiligen Kraftfahrzeugs angeschlossen werden. Wenn keine derartige Beleuchtungseinrichtung vorhanden ist, unterbleibt dies.

Die erfindungsgemäße Vorrichtung ist eine relativ kleine und leichte Einheit. Es ist vorgesehen, diese auf jeweils einen Typ von Akkumulatoren bzw. Elektrofahrrädern abzustimmen und mit diesen Akkumulatoren oder Elektrofahrrädern auszuliefern bzw. als Zubehör dazu anzubieten. Ein einzelner Fahrradträger kann so mit einer Vielzahl unterschiedlicher Typen der erfindungsgemäßen Vorrichtung kombiniert werden. Ein neuer Typ von Akkumulator oder Elektrofahrrad erfordert zwar möglicherweise eine neue erfindungsgemäße Vorrichtung, was aber verglichen mit den Kosten des Akkumulators oder gar des ganzen Elektrofahrrads keine signifikante Belastung darstellt.

Um einem etwaigen Stecker des jeweiligen Fahrradträgers zum Anschluss seiner Beleuchtungseinrichtung an die Elektrik des Kraftfahrzeugs eine definierte Lage gegenüber der Anhängersteckdose des Kraftfahrzeugs zu geben, ist es bevorzugt, wenn der Stecker und die Anhängersteckdose der erfindungsgemäßen Vorrichtung definiert, d. h. starr zueinander ausgerichtet sind. Konkret kann dabei das Gehäuse der erfindungsgemäßen Vorrichtung durchgehende formsteife Bestandteile aufweisen, die sich einerseits bis in den Stecker und andererseits bis in die Anhängersteckdose der erfindungsgemäßen Vorrichtung erstrecken.

Eine effektive Länge der Vorrichtung, d. h. das Maß, um das ein etwaiger Stecker des jeweiligen Fahrradträgers weiter von der Anhängersteckdose des Kraftfahrzeugs absteht, wenn der Stecker und die Anhängersteckdose der erfindungsgemäßen Vorrichtung dazwischen gesteckt sind, beträgt typischerweise nicht mehr als 15 cm. Vorzugsweise beträgt diese effektive Länge nicht mehr als 12 cm. Am meisten bevorzugt sind sehr kurze Ausführungsformen der erfindungsgemäßen Vorrichtung mit einer effektiven Länge von nicht mehr als 10 cm.

Das Anschlusskabel mit dem Anschlussstrecker zum elektrischen Anschluss an den jeweiligen Akkumulator an seinem Ende ist vorzugsweise ein Spiralkabel, damit es eine für verschiedene Anwendungssituationen ausreichende Länge aufweist, ohne durchzuhängen, wenn diese Länge nicht benötigt wird.

Eine etwaige Ladeelektronik, die zum Bereitstellen eines idealen Ladestroms für den jeweils aufzuladenden Akkumulator vorzusehen ist, ist bei der erfindungsgemäßen Vorrichtung in dem Gehäuse mit dem Stecker und der Anhängersteckdose der Vorrichtung angeordnet. Dabei kann eine solche Ladeelektronik auch eine an dem Stecker anliegende Eingangsspannung zur Ausgabe über den Anschlussstecker hochsetzen. So werden häufig Ladespannungen für die Akkumulatoren von Elektrofahrrädern benötigt, die über die bei einem normalen Kraftfahrzeug vorliegende Versorgungsspannung von 12 V hinausgehen. Üblich sind beispielsweise 24 oder auch 32 V.

Wir bereits angedeutet wurde, ist die Ladeelektronik der erfindungsgemäßen Vorrichtung vorzugsweise auf einen bestimmten Typ von Akkumulator mit einer bestimmten Ladespannung abgestimmt. Wenn ein anderer Akkumulator mit einer anderen Ladespannung oder anderen elektrischen Kenngrößen vorhanden ist, ist eine dafür angepasste andere erfindungsgemäße Vorrichtung zu verwenden. Grundsätzlich ist es aber auch denkbar, die erfindungsgemäße Vorrichtung so auszubilden, dass sie durch Umschaltung von außen, entweder mechanisch oder über ein Funksignal, oder durch eigenständiges Erkennen des Typs des angeschlossenen Akkumulators und entsprechend innere Umschaltung an den aktuellen Typ des Akkumulators anpassbar ist. Dies verkompliziert jedoch die Vorrichtung. Wenn sie nur für einen bestimmten Typ von Akkumulator vorgesehen ist, weist sie problemlos jeweils auch den passenden Anschlussstecker für diesen Akkumulator auf. Über diesen Anschlussstecker kann eine Codierung der jeweiligen Vorrichtung für einen bestimmten Typ von Akkumulator erfolgen.

An der erfindungsgemäßen Vorrichtung kann eine Leuchtdiodenanzeige für einen Lademodus der Vorrichtung vorgesehen sein. Vorzugsweise ist diese Leuchtdiodenanzeige an dem Gehäuse der Vorrichtung vorgesehen. Dabei kann beispielsweise eine Leuchtdiode anzeigen, dass die erfindungsgemäße Vorrichtung in Ladebereitschaft ist oder sogar aktuell einen angeschlossenen Akkumulator auflädt, während eine weitere Leuchtdiode anzeigen kann, wenn ein angeschlossener Akkumulator von der erfindungsgemäßen Vorrichtung vollständig aufgeladen wurde.

Das Gehäuse der erfindungsgemäßen Vorrichtung ist vorzugsweise wasserdicht geschlossen. Dabei kann dieser wasserdichte Verschluss besonders einfach hergestellt werden, weil er auch in dem Sinne dauerhaft ausgebildet sein kann, dass im normalen Gebrauch der Vorrichtung keine Öffnung des Gehäuses erfolgt. Das Gehäuse kann sogar so ausgebildet sein, dass es ohne Zerstörung nicht geöffnet werden kann, um eine unbefugte Manipulation von innerhalb des Gehäuses angeordneten Teilen der erfindungsgemäßen Vorrichtung zu verhindern.

Bei der neuen Vorrichtung weist die Anhängersteckdose der Vorrichtung typischerweise denselben Standard auf wie ihr Stecker. Grundsätzlich kann die erfindungsgemäße Vorrichtung aber nicht nur als Zwischenstecker, sondern auch als Adapter für unterschiedliche Standards einer Anhängersteckdose des jeweiligen Kraftfahrzeugs und eines Steckers des jeweiligen Fahrradträgers ausgebildet sein.

Die erfindungsgemäße Vorrichtung kann, insbesondere bezüglich ihrer Ladelektronik alle vorteilhaften Detailausgestaltungen aufweisen, wie sie der Fachmann aus der DE 20 2011 003 991 U1 entnimmt. Hierzu zählen beispielsweise die Beendigung des Ladevorgangs, wenn die Elektrik des jeweiligen Kraftfahrzeugs nur noch eine reduzierte, unter einen Schwellwert abgefallene Versorgungsspannung bereitstellt.

Für die erfindungsgemäße Vorrichtung kann ein Adapter vorgesehen werden, mit dem sie statt an eine Anhängersteckdose an eine Steckdose oder einen Zigarettenanzünder im Inneren des Kraftfahrzeugs anschließbar ist. Ein solcher Adapter weist einen in eine solche Steckdose passenden Stecker und eine Steckdose auf, in die der Stecker zum Einstecken in eine Anhängersteckdose passt. Damit wird es möglich, Akkumulatoren von Fahrrädern auch innerhalb eines Kraftfahrzeugs zu laden. Dies ist bei der erfindungsgemäßen Vorrichtung jedoch nur eine Option.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Die Erfindung wird im Folgenden anhand eines Ausführungsbeispiels unter Bezugnahme auf die beigefügte Zeichnung näher erläutert und beschrieben.

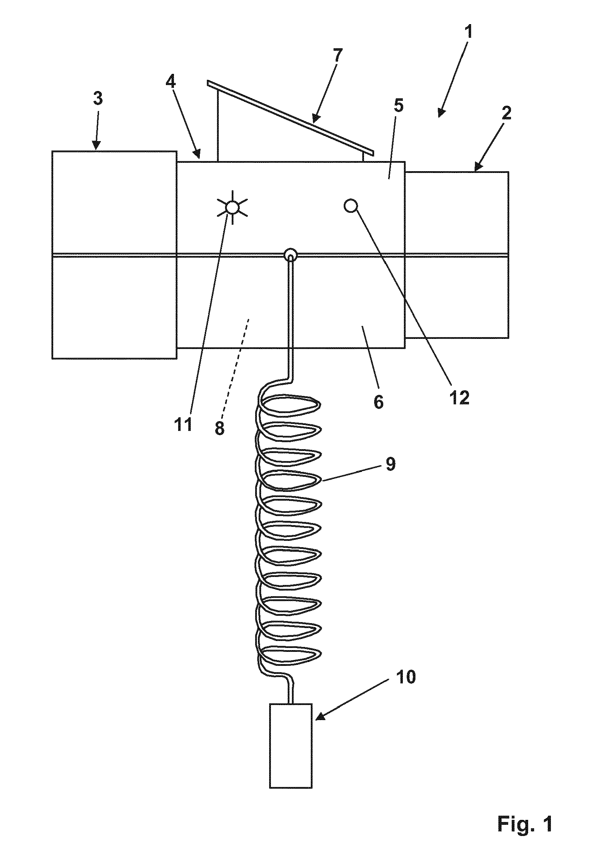

- **Fig. 1**: ist eine Seitenansicht einer erfindungsgemäßen Vorrichtung zum Aufladen eines Akkumulators eines Elektrofahrzeugs auf einem an ein Kraftfahrzeug angebauten Fahrradträger, wobei hier weder das Elektrofahrzeug noch sein Akkumulator noch das jeweilige Kraftfahrzeug oder der daran angebaute Fahrradträger dargestellt sind.

### FIGURENBESCHREIBUNG

Die in **Fig. 1** dargestellte Vorrichtung 1 weist einen Stecker 2 auf, der zum Einstecken in eine hier nicht dargestellte Anhängersteckdose eines Kraftfahrzeugs vorgesehen ist. Die Vorrichtung 1 weist auch eine eigene Anhängersteckdose 3 auf. Diese Anhängersteckdose 3 weist üblicherweise denselben Standard auf wie die Anhängersteckdose des Kraftfahrzeugs und der Stecker 2 der Vorrichtung 1. Der Stecker 2 und die Anhängersteckdose 3 der Vorrichtung 1 sind an einem starren Gehäuse 4 der Vorrichtung 1 vorgesehen. Sie werden konkret jeweils teilweise durch Teile 5 und 6 des Gehäuses 4 ausgebildet, die sich einerseits bis in den Stecker 2 und andererseits bis in die Anhängersteckdose 3 erstrecken. Der Stecker 2 und die Anhängersteckdose 3 sind koaxial zueinander ausgerichtet, wobei dies nicht zwingend ist. Sehr bevorzugt ist jedoch die feste, d. h. starre Ausrichtung der Anhängersteckdose 3 gegenüber dem Stecker 2. Bei dem hier gegebenen gleichen Standard des Steckers 2 und der Anhängersteckdose 3 kann die Vorrichtung 1 in den bislang beschriebenen Teilen auch als Zwischenstecker bezeichnet werden. Dies schließt ein, dass die Vorrichtung 1 eine direkte Verbindung der gleichnamigen Pole des Steckers 2 und der Anhängersteckdose 3 umfasst. Eine Abstützfläche 7, die geneigt zur gemeinsamen Achse des Steckers 2 und der Anhängersteckdose 3 verläuft, ist für eine definierte Anlage einer etwaigen Verschlussklappe einer Anhängersteckdose des Kraftfahrzeugs vorgesehen, in die der Stecker 2 eingesteckt wird. Dieses Einstecken erfolgt, um die Vorrichtung 1 mit der Elektrik des Kraftfahrzeugs zu verbinden und um insbesondere über diese Elektrik eine Versorgungsspannung für eine im Inneren des Gehäuses 4 angeordnete Ladeelektronik 8 zu erhalten. Dem gegenüber dient die Anhängersteckdose 3 der Vorrichtung 1 für den Anschluss beispielsweise einer Beleuchtungseinrichtung eines Fahrradträgers an die Elektrik des Kraftfahrzeugs, an das der Fahrradträger angebaut ist. Die Vorrichtung 1 ist vorgesehen, um einen Akkumulator eines Elektrofahrrads auf diesem Fahrradträger aufzuladen. Dazu gibt die Ladelektronik 8 über ein Anschlusskabel 9 und einen Anschlussstecker 10 eine Ladespannung aus. Das Anschlusskabel 9 tritt seitlich aus dem Gehäuse 4 aus und ist als sein Durchhängen vermeidendes Spiralkabel ausgebildet. Das Gehäuse 5 der Vorrichtung 1 ist zum Schutze der Ladeelektronik 8 wasserdicht geschlossen. Dabei kann dieser wasserdichte Verschluss auch in dem Sinne dauerhaft sein, dass ein Öffnen des Gehäuses 4 durch Trennen seiner Teile 5 und 6 durch den Benutzer der Vorrichtung 1 durch geeignete Maßnahmen, wie beispielsweise unlösbare Verrastungen, unterbunden ist.

Die von der Ladeelektronik 8 ausgegebene Ladespannung ist auf den jeweiligen Akkumulator abgestimmt, indem die Vorrichtung 1 speziell für diesen Akkumulator ausgebildet ist und zusammen mit diesem oder dem jeweiligen Elektrofahrrad oder als Zubehör dazu geliefert wurde. In jedem Fall ist die Vorrichtung 1 unabhängig von dem verwendeten Fahrradträger. Die Vorrichtung 1 ermöglicht das Aufladen des Akkumulators des auf dem Fahrradträger montierten Fahrrads während der Fahrt des Kraftfahrzeugs, an dem der Fahrradträger montiert ist. Dabei kann die Funktion der Ladeelektronik 8 der Vorrichtung 1 durch eine erste Leuchtdiode 11 positiv angezeigt werden, während eine zweite Leuchtdiode 12 den Abschluss des jeweiligen Ladevorgangs nach außen anzeigt. Die Ladelektronik 8 stellt die benötigte Ladespannung bzw. einen bei dieser Ladungsspannung fließenden Strom in einer Weise bereit, die auf ein optimales Aufladen des Akkumulators abgestimmt ist. Hierzu setzt sie gegebenenfalls eine Versorgungsspannung, die an dem Stecker 2 anliegt, hoch. Die Ladelektronik 8 sorgt auch dafür, dass trotz eines etwaigen Hochsetzens der Spannung ein möglichst konstanter Ladestrom fließt, um die Lebensdauer des Akkumulators zu maximieren.

### BEZUGSZEICHENLISTE

- 1: Vorrichtung
- 2: Stecker
- 3: Anhängersteckdose
- 4: Gehäuse
- 5: Teil des Gehäuses
- 6: Teil des Gehäuses
- 7: Anlagefläche
- 8: Ladeelektronik
- 9: Anschlusskabel
- 10: Anschlussstecker
- 11: Leuchtdiode
- 12: Leuchtdiode

## Patentansprüche

1. Vorrichtung (1) zum Aufladen von Akkumulatoren von Elektrofahrrädern auf einem an ein Kraftfahrzeug angebauten Fahrradträger, mit einem Stecker (2) zum Einstecken in eine Anhängersteckdose des Kraftfahrzeugs und mit einem am Ende eines Anschlusskabels (9) angeordneten Anschlussstecker (10) zum elektrischen Anschluss an einen Akkumulator, **dadurch gekennzeichnet, dass** der Stecker (2) an einem Ende eines Gehäuses (4) vorgesehen ist, an dessen anderen Ende eine Anhängersteckdose (3) der Vorrichtung (1) ausgebildet ist, und dass das Anschlusskabel (9) seitlich aus dem Gehäuse (4) austritt.

2. Vorrichtung (1) nach Anspruch 1, **dadurch gekennzeichnet, dass** der Stecker (2) und die Anhängersteckdose (3) der Vorrichtung (1) starr zueinander ausgerichtet sind.

3. Vorrichtung (1) nach Anspruch 1 oder 2, **dadurch gekennzeichnet, dass** das Gehäuse (4) durchgehende formsteife Teile (5, 6) aufweist, die sich einerseits bis in den Stecker (2) und andererseits bis in die Anhängersteckdose (3) der Vorrichtung (1) erstrecken.

4. Vorrichtung (1) nach einem der Ansprüche 1 bis 3, **dadurch gekennzeichnet, dass** eine effektive Länge der Vorrichtung (1) zwischen dem Stecker (2) und der Anhängersteckdose (3) nicht mehr als 15 cm, vorzugsweise nicht mehr als 12 cm und am meisten bevorzugt nicht mehr als 10 cm beträgt.

5. Vorrichtung (1) nach einem der Ansprüche 1 bis 4, **dadurch gekennzeichnet, dass** das Anschlusskabel (9) ein Spiralkabel ist.

6. Vorrichtung (1) nach einem der Ansprüche 1 bis 5, **dadurch gekennzeichnet, dass** in dem Gehäuse (4) eine Ladeelektronik (8) für den Akkumulator angeordnet ist.

7. Vorrichtung (1) nach Anspruch 6, **dadurch gekennzeichnet, dass** die Ladeelektronik (8) eine an dem Stecker (2) anliegende Eingangsspannung zur Ausgabe über den Anschlussstecker (10) hochsetzt.

8. Vorrichtung (1) nach Anspruch 6 oder 7, **dadurch gekennzeichnet, dass** die Ladeelektronik (8) auf einem bestimmten Typ von Akkumulator mit einer bestimmten Ladespannung abgestimmt ist.

9. Vorrichtung (1) nach einem der Ansprüche 1 bis 8, **dadurch gekennzeichnet, dass** eine Leuchtdiodenanzeige (11, 12) für einen Lademodus der Vorrichtung (1) an dem Gehäuse (4) vorgesehen ist.

10. Vorrichtung (1) nach einem der Ansprüche 1 bis 9, **dadurch gekennzeichnet, dass** das Gehäuse (4) dauerhaft wasserdicht geschlossen ist.

11. Vorrichtung (1) nach einem der Ansprüche 1 bis 10, **dadurch gekennzeichnet, dass** die Anhängersteckdose (3) der Vorrichtung (1) denselben Standard aufweist wie ihr Stecker (2).

12. Vorrichtung (1) nach einem der Ansprüche 1 bis 11, **dadurch gekennzeichnet, dass** ein zusätzlicher Adapter vorgesehen ist, der einen Stecker zum Einstecken in eine Steckdose oder einen Zigarettenanzünder im Inneren des Kraftfahrzeugs und eine Steckdose zum Aufnehmen des Steckers (2) zum Einstecken in eine Anhängersteckdose aufweist.
